# FASCICULE DE BREVET EUROPEEN

(11) **EP 0 798 043 B1**
(45) Date de publication et mention de la délivrance du brevet: **24.05.2006**
(21) Numéro de dépôt: 97400571.2
(22) Date de dépôt: 14.03.1997
(51) Int. Cl.: B01J 38/42, B01J 38/46, B01J 27/32

(54) **Regeneration des catalyseurs de fluoration en phase gazeuse**
Regenerierung von Katalysatoren zur Fluorierung in der Gasphase
Regeneration of gas phase fluorination catalysts

(30) Priorité: 29.03.1996 FR 9603972
(43) Date de publication de la demande: 01.10.1997
(73) Titulaire: Arkema, 92800 Puteaux (FR)
(72) Inventeur: Lacroix, Eric, 69480 Amberieux D'Azergues (FR); Cheminal, Bernard, 69510 Saucieu-en-Jarrest (FR); Requieme, Benoit, 69390 Charly (FR)
(74) Mandataire: Dang, Doris

(56) Documents cités:
- EP-A- 0 475 693
- DE-C- 4 419 534
- US-A- 5 262 575

## Description

La présente invention concerne un procédé de régénération des catalyseurs de fluoration en phase gazeuse, ladite régénération consistant à traiter le catalyseur usagé par un flux d'HF et de chlore.

Les recherches intenses menées sur les substituts des chlorofluorocarbures (CFC) s'orientent entre autres vers la synthèse d'hydrohalogénoalcanes. Certaines étapes de ces synthèses peuvent être réalisées par fluoration, en catalyse phase gazeuse hétérogène, avec l'acide fluorhydrique. A cette fin, de nombreux catalyseurs de fluoration ont été mis au point et sont décrits dans la littérature.

La synthèse par fluoration de composés halogénés contenant des atomes d'hydrogène s'est révélée plus complexe que la synthèse de molécules perhalogénées (CFC). En effet, les composés hydrogénés (matières premières, intermédiaires réactionnels ou produits finis) sont plus fragiles que les composés perhalogénés et la présence d'atomes d'hydrogène peut induire des réactions de deshydrohalogénation, générant des oléfines susceptibles de se décomposer et d'encrasser le catalyseur. D'autre part, la substitution d'un chlore par un fluor sur un groupement carboné portant également des atomes d'hydrogène, est difficile et doit souvent être réalisée dans des conditions opératoires sévères entraînant une désactivation plus rapide du catalyseur.

La fluoration du F133a (CF₃ - CH₂Cl) en F134a (CF₃ - CH₂F), exemple largement décrit dans la littérature, traduit bien ces difficultés. Dans ce cas, la déshydrofluoration du F133a génère du F1122 (CF₂ = CHCl) qui est un des précurseurs du "coke" entraînant l'encrassage du catalyseur. Par ailleurs, cette substitution Cl/F est difficile et thermodynamiquement défavorisée ; elle nécessite donc des températures relativement élevées (> 300 °C) qui accélèrent ce cokage et engendrent des risques de désactivation par évolution de la structure du catalyseur (cristallisation,...). D'autres fluorations, a priori plus aisées, sont basées sur la fluoration d'oléfines halogénées (C₂HCl₃, C₂Cl₄,....) ou de composés susceptibles de se décomposer thermiquement (F30,...) ; elles présentent donc aussi des risques de cokage.

Par le terme "coke", on entend non seulement le véritable coke déposé sur le catalyseur, mais également tous les lourds organiques qui encrassent le catalyseur et ont une formule chimique semblable à celle de polymères halogénés ; ils proviennent de la décomposition des réactifs et des produits de réaction dans les conditions de fluoration en phase gazeuse.

Afin d'améliorer la durée des catalyseurs de fluoration, différents procédés de régénération ou de maintien de leur activité ont déjà été décrits dans la littérature. Ainsi la demande de brevet japonais 1262946/89 décrit la régénération, en absence d'organiques, des catalyseurs de fluoration à base de chrome par un traitement en présence d'oxygène.

La demande de brevet EP 475 693 revendique également un procédé de régénération des catalyseurs à base de chrome, mais cette fois par un traitement au moyen d'un mélange d'oxydant oxygéné et d'HF (plus spécialement, un mélange air/HF), à une température comprise entre 300 et 500°C. De même, le brevet US 5 407 877 décrit la régénération en présence de vapeur d'eau des mêmes catalyseurs.

L'ajout continu de chlore durant les réactions de dismutation (absence d'HF) est décrit dans la demande de brevet japonais 49-134612/74 pour maintenir l'activité de catalyseurs à base de chrome.

Finalement, le document H1129 (US Statutory Invention Registration) décrit l'ajout continu de chlore lors de la fluoration du F133a pour maintenir l'activité catalytique d'un catalyseur à base de chrome.

Ces procédés ne sont cependant pas complètement satisfaisants. En effet, ceux basés sur une régénération en présence d'oxygène par combustion du "coke" nécessitent, tout au long de la régénération, un parfait contrôle de l'exothermie pour éviter, dans le lit catalytique, la formation de points chauds néfastes au catalyseur.

En raison d'une chloration des produits organiques (remplacement d'un atome d'hydrogène par un atome de chlore), l'ajout de chlore en continu pour éventuellement améliorer la durée de vie du catalyseur lors de la synthèse d'hydrofluoroalcanes ou d'hydrochlorofluoroalcanes, se traduit par une perte de sélectivité en bon produit et donc à une perte de rendement.

Il a maintenant été trouvé un procédé de régénération des catalyseurs de fluoration désactivés, ne présentant pas ces inconvénients. Ce procédé basé sur le traitement du catalyseur désactivé par du chlore et de l'acide fluorhydrique permet non seulement de restaurer l'activité du catalyseur, mais il est facile à mettre en oeuvre industriellement et, en raison d'une exothermie minime, il permet d'éviter une cristallisation irréversible du catalyseur. En effet, en dehors de la chaleur d'adsorption des réactifs durant les premières minutes après leur introduction sur le catalyseur désorbé d'HF et de produits organiques, la régénération par le mélange Cl₂/HF n'est pratiquement pas exothermique et, à la différence d'une régénération par combustion du "coke" (en présence d'oxygène), ne nécessite pas un contrôle parfait de l'exothermie tout au long de la régénération.

La présente invention a donc pour objet un procédé de régénération de catalyseurs de fluoration du dichlorométhane et/ou chlorofluorométhane en phase gazeuse comprenant le traitement du catalyseur désactivé par du chlore et de l'acide fluorhydrique, température comprise entre 250 et 450 °C, caractérisé en ce que ledit traitement est effectué pendant la réaction de fluoration avec ajout discontinu de chlore.

La température optimale est à choisir en fonction des conditions (nature des composés organiques, température,...) de la fluoration qui a précédé la régénération. Généralement cette température optimale est égale ou légèrement supérieure à celle pratiquée durant la fluoration ; elle est donc très souvent comprise entre 300 et 430°C.

Le rapport molaire (RM) HF/ HF + Cl₂ peut être variable (0 < RM < 1), mais pour des raisons d'efficacité, il est préférable de travailler avec un rapport molaire HF/HF + Cl₂ compris entre 0,05 et 0,995 et plus particulièrement entre 0,3 et 0,99. Durant la régénération, la valeur de RM peut même être modifiée ; ainsi, par exemple, il est possible de débuter avec un mélange riche en chlore pour terminer avec un mélange riche en HF.

La durée de la régénération dépend bien évidemment de l'état de désactivation du catalyseur, des conditions de régénération et du degré de régénération souhaité. Généralement elle est comprise entre 10 et 300 heures et le plus souvent entre 24 et 150 heures. Il est préférable de régénérer le catalyseur dès les premiers signes de désactivation (régénération "préventive"), plutôt que d'attendre une désactivation importante et par la même, une régénération plus difficile. La fréquence de ces régénérations doit être optimisée en fonction des gains sur la durée de vie du catalyseur par rapport aux pertes de production qu'elles occasionnent.

Durant la régénération, le temps de contact des réactifs avec le catalyseur peut être également très variable et compris entre 1 seconde et l'infini (régénération en statique). Il est plus généralement compris entre 5 et 300 secondes et préférentiellement entre 10 et 60 secondes.

La régénération est souvent conduite à la même pression que la réaction de fluoration ou à une pression inférieure. On peut même envisager d'opérer sous un léger vide de sorte à mieux désorber les lourds déposés sur le catalyseur. La régénération est généralement conduite sous une pression comprise entre 10 kPa et 5 MPa et, le plus souvent, entre 50 kPa et 2 MPa.

La régénération Cl₂/HF selon l'invention peut s'appliquer à tous catalyseurs de fluoration en phase gazeuse décrits dans la littérature. Elle convient particulièrement bien aux catalyseurs constitués par au moins un des métaux suivants : Cr, V, Co, Mg, Fe, Ni, Zn.

Dans le cas des catalyseurs à base de chrome, la régénération selon la présente invention n'induit pas de pertes en chrome par oxydation du Cr^{III}. De telles pertes peuvent être observées lorsque l'on utilise de l'oxygène, mais la combinaison Cl₂/HF ne présente pas cet inconvénient.

Contrairement à une régénération du catalyseur hors organiques, cette technique permet de ne pas interrompre la production de l'unité ; la perte momentanée de sélectivité, due à la partie du chlore qui réagit avec les organiques, est alors compensée par un gain de production.

Une optimisation de la fréquence des régénérations conduit généralement à programmer une régénération lorsque le catalyseur a perdu entre 5 et 60 %, de préférence entre 10 et 30 %, de son activité.

L'exemple suivant illustre l'invention sans la limiter.

### EXEMPLE 1 : Catalyseur Ni-Cr/AlF₃ (régénération durant la fluoration du F30)

Un catalyseur (35 ml) à base de Ni et de Cr supportés sur une alumine fluorée est utilisé sous 15 bars, à 300°C et avec un rapport molaire HF/F 30 égal à 3. Lorsque l'activité a chuté d'environ 30 %, on régénère le catalyseur sans interrompre la fluoration, en ajoutant du chlore aux réactifs pendant 12 heures (rapport molaire Cl₂/F 30 = 0,02).

Les résultats d'activité avant et après régénération sont indiqués dans le tableau I. Les pertes en sélectivité sont de l'ordre de 1 %.

Dans le tableau I, les abréviations utilisées ont les significations suivantes :
- tc.(s) = Temps de contact en secondes
- RM = Rapport molaire
- TTG = Taux de transformation global

**TABLEAU I**

| **EXEMPLE (Catalyseur)** | **ETAT DU CATALYSEUR** | **CONDITIONS DE TEST** | | | | **ACTIVITE TTG Org. (%)** |
|---|---|---|---|---|---|---|
| | | **Temp.(°C)** | **tc.(s)** | **Pression (en MPa)** | **RM HF/Org.** | |
| 1 | initial | 300 | 5 | 1,5 | 3 | 43,4 |
| (Ni-Cr/AlF₃ en | usagé | 300 | 5 | 1,5 | 3 | 31,6 |
| fluoration du F30) | régénéré | 300 | 4,9 | 1,5 | 2,9 | 44,3 |

## Revendications

1. Procédé de régénération d'un catalyseur de fluoration du dichlorométhane et/ou chlorofluorométhane en phase gazeuse comprenant le traitement du catalyseur désactivé par du chlore, et de l'acide fluorhydrique, à une température comprise entre 250 et 450°C, **caractérisé en ce que** ledit traitement est effectué pendant la réaction de fluoration avec ajout discontinu de chlore.

2. Procédé selon la revendication 1, dans lequel on opère à une température comprise entre 300 et 430°C.

3. Procédé selon la revendication 2, dans lequel on opère un rapport molaire HF/HF + Cl2 compris entre 0,05 et 0,995, de préférence entre 0,3 et 0,99.

4. Procédé selon l'une des revendications 1 à 3, dans lequel on utilise d'abord un mélange riche en chlore et on termine la régénération avec un mélange riche en HF.

5. Procédé selon l'une des revendications 1 à 4, dans lequel on opère à une pression comprise entre 10 kPa et 5 MPa, de préférence entre 50 kPa et 2 Mpa.

6. Procédé selon l'une des revendications 1 à 5, dans lequel le temps de contact des réactifs avec le catalyseur est compris entre 5 et 300 secondes, de préférence entre 10 et 60 secondes.

7. Procédé selon l'une des revendications 1 à 6, dans lequel la durée de régénération est comprise entre 10 et 300 heures, de préférence entre 24 et 150 heures.

## Claims

1. Process for regeneration of a catalyst for the gas phase fluorination of dichloromethane and/or chlorofluoromethane comprising the treatment of the deactivated catalyst with chlorine and hydrofluoric and at a temperature of between 250 and 450°C, **characterized in that** the said treatment is carried out during the fluorination reaction with noncontinuous addition of chlorine.

2. Process according to Claim 1, in which the operation is carried out at a temperature of between 300 and 430°C.

3. Process according to Claim 2, in which the operation is carried out with an HF/HF + Cl₂ molar ratio of between 0.05 and 0.995, preferably between 0.3 and 0.99.

4. Process according to one of Claims 1 to 3, in which a chlorine-rich mixture is employed first and the regeneration is ended with an HF-rich mixture.

5. Process according to one of Claims 1 to 4, in which the operation is carried out at a pressure of between 10 kPa and 5 MPa, preferably between 50 kPa and 2 MPa.

6. Process according to one of Claims 1 to 5, in which the time of contact of the reactants with the catalyst is between 5 and 300 seconds, preferably between 10 and 60 seconds.

7. Process according to one of Claims 1 to 6, in which the duration of regeneration is between 10 and 300 hours, preferably between 24 and 150 hours.

## Patentansprüche

1. Verfahren zur Regeneration eines Katalysators für die Fluorierung von Dichlormethan und/oder Chlorfluormethan in der Gasphase, bei dem man den desaktivierten Katalysator bei einer Temperatur zwischen 250 und 450°C mit Chlor und Fluorwasserstoffsäure behandelt, **dadurch gekennzeichnet, daß** man die Behandlung während der Fluorierungsreaktion mit diskontinuierlichem Chlorzusatz durchführt.

2. Verfahren nach Anspruch 1, bei dem man bei einer Temperatur zwischen 300 und 430°C arbeitet.

3. Verfahren nach Anspruch 2, bei dem man mit einem Molverhältnis HF/HF+Cl₂ zwischen 0,05 und 0,995, vorzugsweise zwischen 0,3 und 0,99, arbeitet.

4. Verfahren nach einem der Ansprüche 1 bis 3, bei dem man zunächst eine chlorreiche Mischung verwendet und die Regeneration mit einer HFreichen Mischung beendet.

5. Verfahren nach einem der Ansprüche 1 bis 4, bei dem man bei einem Druck zwischen 10 kPa und 5 MPa, vorzugsweise zwischen 50 kPa und 2 MPa, arbeitet.

6. Verfahren nach einem der Ansprüche 1 bis 5, bei dem die Kontaktzeit der Reaktanten mit dem Katalysator zwischen 5 und 300 Sekunden, vorzugsweise zwischen 10 und 60 Sekunden, liegt.

7. Verfahren nach einem der Ansprüche 1 bis 6, bei dem die Dauer der Regeneration zwischen 10 und 300 Stunden, vorzugsweise zwischen 24 und 150 Stunden, liegt.
